# EUROPEAN PATENT APPLICATION

(11) **EP 1 256 372 A2**
(43) Date of publication of application: **13.11.2002**
(21) Application number: 02010019.4
(22) Date of filing: 04.05.2002
(51) Int. Cl.: B01D 63/02, B01D 63/10, B01D 65/00

(54) **Hollow fiber membrane contactor and method for making same**

(30) Priority: 08.05.2001 US 851242
(71) Applicant: Celgard Inc., Charlotte, South Carolina 28273 (US)
(72) Inventor: Runkle, Charles J., Charlotte, NC 28277 (US); Sengupta, Amitava, Charlotte, NC 28270 (US); Vido, Tony R., Belmont NC 28012 (US)
(74) Representative: Luderschmidt, Schüler & Partner

(57) **Abstract**

The present invention is directed to a method of making a hollow fiber membrane contactor comprising the steps of: winding a hollow fiber fabric around a center tube, potting the fabric and the tube together, forming thereby a unitized structure, placing the structure into a shell, potting the structure and the shell together, and forming thereby a cartridge. The invention, also, includes a hollow fiber membrane contactor comprising a unitized structure. The structure includes a center tube, a hollow fiber fabric wound around the tube, and a first potting material joining together the fabric and the tube. A second potting material joins together the structure and the shell.

## Description

### Field of the Invention

This invention is directed to a hollow fiber membrane contactor and the method for making the same.

### Background of the Invention

Hollow fiber membrane contactors are known. For example, see U.S. Patent Nos. 3,288,877; 3,755,034; 4,220,535; 4,664,681; 4,940,617; 5,186,832; 5,264,171; 5,284,584; and 5,449,457. Hollow fiber membrane contactors are commercially available under the name of LIQUI-CEL® from Celgard Inc. of Charlotte, North Carolina and under the name of SEPAREL® from Dianippon Ink and Chemicals of Tokyo, Japan. Such contactors have numerous uses, one being the degassing of liquids.

To facilitate manufacture of these contactors, the hollow fiber membranes are typically formed into a fabric (e.g., woven or knitted). The fabric is wound around a mandrel (e.g., a perforated center tube) and fixed into place by potting the fabric edges, with either thermosetting or thermoplastic materials. See, for example, U.S. Patent Nos. 4,940,617 and 5,284,584. This unit can then be inserted within a shell and sealed, i.e., with or without O-rings. See, for example, U.S. Patent No. 6,207,053. Because of potting shrinkage, the uniformity of the unit is poor and causes unit-to-shell sealing problems that are costly to rectify. As the size (e.g., the diameter) of the contactor increases, the shrinkage problem becomes more severe, particularly with centrifugal potting. Accordingly, by this method, the size of the unit has been limited, to about six inch diameters, because of shrinkage arising from the solidification of the potting materials.

Celgard Inc. offers a 10-inch diameter contactor. This contactor is difficult to seal because of potting shrinkage. This shrinkage, which is not uniform from one contactor to the next, makes potting-to-shell sealing difficult. To meet this difficulty, a system of four o-rings is used to form the seal between the potting and the shell. While this has been adequate, these seals are labor-intensive and complex, thereby driving up the cost of the contactor.

Accordingly, there is a need for an improved hollow fiber membrane contactor, which minimizes or eliminates the problems arising from potting shrinkage, and a method of making it.

### Summary of the Invention

The present invention is directed to a method of making a hollow fiber membrane contactor comprising the steps of: winding a hollow fiber fabric around a center tube, potting the fabric and the tube together, forming thereby a unitized structure, placing the structure into a shell, potting the structure and the shell together, and forming thereby a cartridge.

Additionally, the invention includes a hollow fiber membrane contactor comprising a unitized structure. The structure includes a center tube, a hollow fiber fabric wound around the tube, and a first potting material joining together the fabric and the tube. A second potting material joins together the structure and the shell.

### Description of the Drawings

For the purpose of illustrating the invention, there is shown in the drawings a form which is presently preferred; it being understood, however, that this invention is not limited to the precise arrangement and instrumentalities shown.

Figure 1 is a schematic illustration of a hollow fiber membrane contactor.

Figure 2 is an illustration of the first potting step.

Figure 3 is an illustration of the second potting step, before potting.

Figure 4 is an illustration of the second potting step, after potting.

Figure 5 is a schematic illustration of the inventive contactor, in use.

### Detailed Description of the Invention

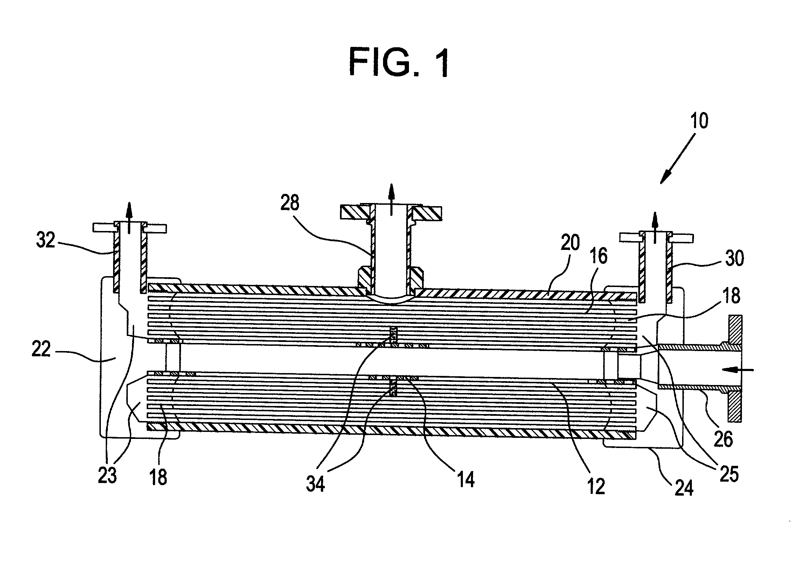

Referring to the drawings wherein like numerals indicate like elements, there is shown in Figure 1 a hollow fiber membrane contactor 10. Contactor 10 includes a center tube 12. Tube 12 has a plurality of perforations 14. Hollow fiber fabric 16 is wound around tube 12. A tube sheet 18 is located at each of the lateral ends of fabric 16. The tube 12, fabric 16, and tube sheets 18 define a unit or a unitized structure. Shell 20 surrounds that unit. Tube sheets 18, tube 12, fabric 16, and shell 20 are joined together, thereby fixing these components in place and forming a gas and/or liquid tight seal therebetween. The unit and the shell define a cartridge. End caps 22 and 24 are placed at the lateral ends of the cartridge. The cartridge and the end caps define a contactor.

Within the contactor 10, there is a shell side passageway and a lumen side passageway. The shell side refers to the flow over the exterior surface of the membranes. In Figure 1, the shell side passageway is defined by port 26, center tube 12, perforations 14, the exterior surfaces of the membranes of the fabric 16, tube sheet 18, shell 20, and port 28. The lumen side refers to flow through the lumens of the hollow fibers. In Figure 1, the lumen side passageway is defined by port 30, headspace 25, tube sheet 18, the lumens of the hollow fibers of fabric 16, headspace 23, and port 32. As will be readily apparent to those of ordinary skill, placement of ports may vary, so long as the integrity of the shell side and the lumen side passages is maintained.

With regard to the location of port 28, it is preferably located between end caps 22 and 24, specifically on the center line between the end caps. With regard to the orientation of ports 30,32, and port 28, they are preferably offset from each other, e.g., 180° or preferably 90°. One consideration for port orientation is the subsequent ease of piping the contactor into a system.

In preferred operation, a liquid, for example laden with an entrained gas, is introduced to contactor 10 via port 26. Liquid enters center tube 12 and exits the tube via perforations 14. The liquid travels over the exterior surface of the hollow fibers of fabric 16 and exits contactor 10 via port 28. Ports 30 and 32 are coupled with a vacuum source and are in communication with the lumen side of the hollow fibers. Thus, as the gas-laden liquid travels over the exterior surface of the hollow fibers, vacuum drawn on the lumen side of the fibers provides the driving force for the diffusion of the gas from the liquid to the lumen side of the fibers where it is exhausted via ports 30 and 32. Alternatively, liquid may be introduced via port 28 and discharged via port 26. Also, a sweep gas may be introduced via either port 30 or 32 which, in some cases, can facilitate diffusion of the gas from the liquid.

Spacer 34 is used to maintain the space between the layers of the wound fabric so that fluid may be evenly distributed over the entire surface of all the hollow fibers. This distribution is important to maximize removal efficiency of the contactor. See U.S. Patent No. 4,940,617. The spacer, also, functions as a baffle. See U.S. Patent Nos. 4,220,535 and 5,264,171.

With regard to the contactor's materials of construction, lightweight, inert, solvent or corrosion resistant, and capable of withstanding various pressures are considerations. The hollow fibers of fabric 16 are any membranes suitable for use in diffusion operations. See Kesting, R. E., *Synthetic Polymeric Membranes*, 2^{nd} ed., John Wiley & Sons, New York, NY, (1985), incorporated herein by reference. Examples include, but are not limited to, microporous polyolefin membranes, commercially available under the name of CELGARD® hollow fibers from Celgard Inc. of Charlotte, NC or asymmetric membranes from Dainippon Ink and Chemicals of Tokyo, Japan, see U.S. Patent No. 4,664,681 incorporated herein by reference. The center tube 12 is preferably a 1.5-inch Schedule 40 ABS pipe. The shell is preferably a 6-inch Schedule 40 ABS pipe. Alternatively, shell 20 may be a fluoropolymer lined fiber reinforced body, see U.S. Patent No. 6,063,277 incorporated herein by reference. The end caps 22 and 24 are preferably made of thermoplastic materials. Tube sheets 18 will be discussed in greater detail below.

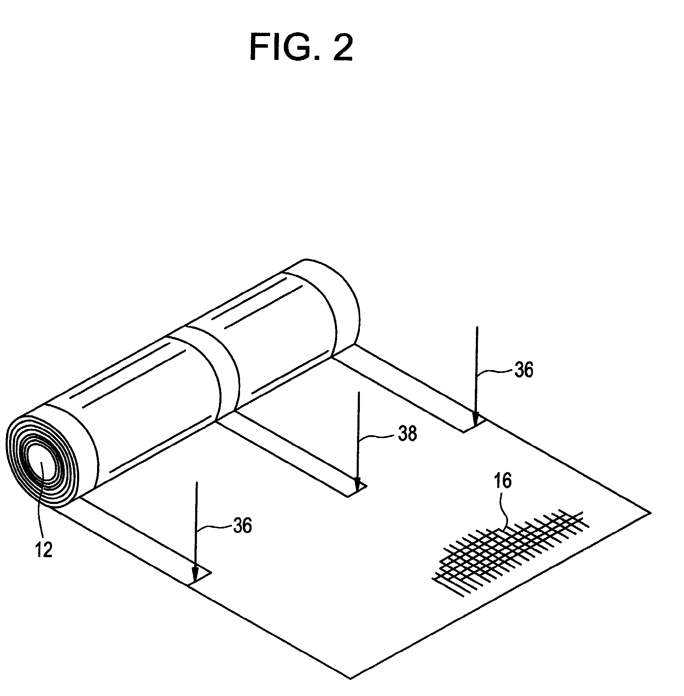

Referring to Figures 2-4, the manufacture of the contactor 10 will be illustrated.

In Figure 2, center tube 12 is used as a mandrel. Fabric 16 is wound around tube 12. Simultaneously with winding, potting resin beads 36 are laid at the lateral edges of fabric 16 and form tube sheets 18, i.e., the first or bead-potting step. Optionally, a bead 38 may also be laid between beads 36, thereby forming spacer 34. At the conclusion of this step, the potting is, preferably, a gelatinous solid 37 and the unitized structure is formed.

After the first potting step, the unitized structure is inserted into the shell 20. Shell 20 and the structure are inserted into a mold 42.

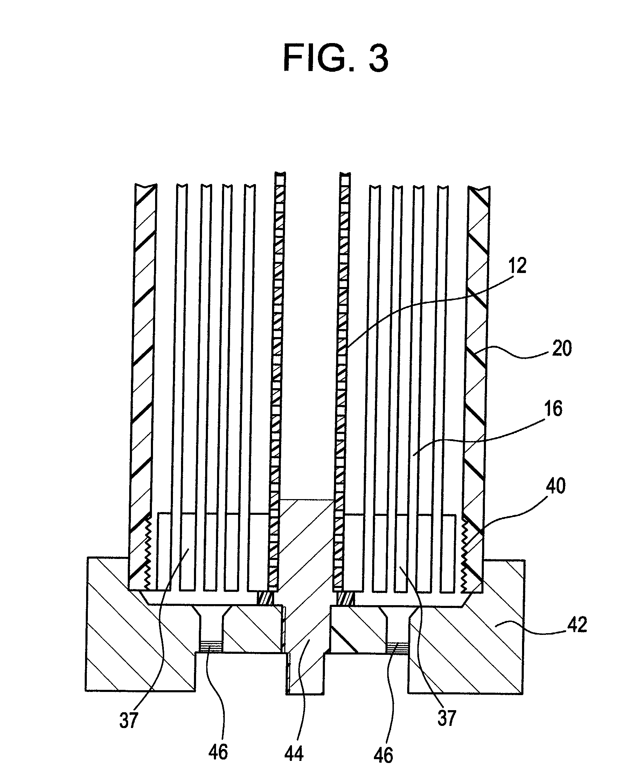

Referring to Figure 3, mold 42, preferably, consists of a part that engages shell 20, a center mold piece 44 that engages tube 12, and potting injection ports 46. The mold thereby centers the unit within the shell.

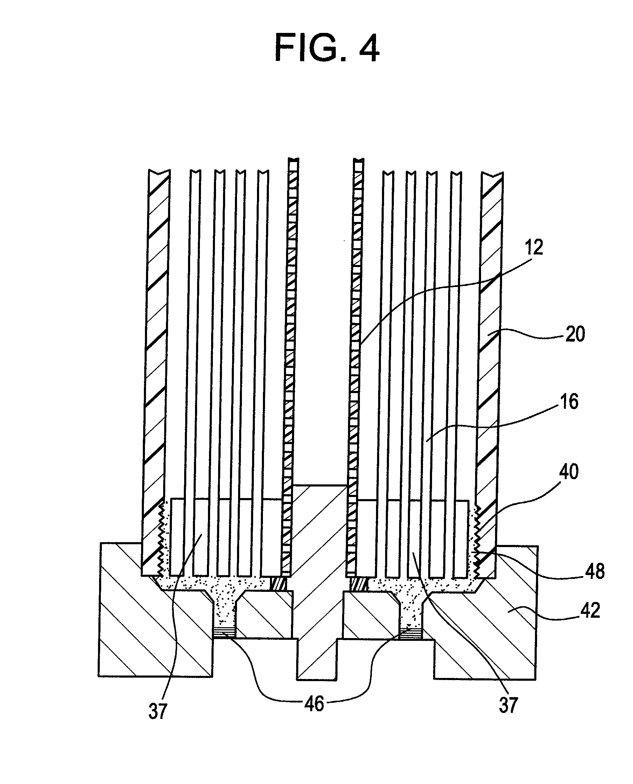

Referring to Figure 4, a second potting material 48 is injected through the mold, into the space between shell 20 and solid 37, and thereby joins the shell to the unitized structure, i.e., the second or mold-potting step. Preferably, serrations 40 are formed on the internal end portion of shell 12 to improve joining and creation of a seal.

The potting resins are allowed to solidify. The cartridge is removed from the mold. The ends are, preferably, subjected to a rotary cut to open the end of the hollow fibers and to generate a planar cut surface that is perpendicular to the centerline of the cartridge.

After the second potting step, the cartridge is heat-treated. Heat-treatment increases the thermal/mechanical integrity of the cartridge by reducing residual stress. Additionally, when an epoxy potting is used, this heat-treatment further cross-links and hardens the potting. Reduced stress lessens the occurrence of cracking at interfaces and joints. Heat-treating is, preferably, for a period of time sufficient for the cartridge to come to thermal equilibrium. For example, a six-inch diameter contactor with an epoxy potting may be adequately heat-treated in about 16 hours at 60°C in a hot air oven (i.e., the cartridge at room temperature is placed in the 60°C oven for about 16 hours).

The end caps are then joined to the cartridge. Joining is preferably by solvent weld techniques, but may include the hot-plate welding techniques, see U.S. Patent No. 6,207,053 incorporated herein by reference.

Preferably, a second heat-treatment is performed after the end caps are joined. As before, this heat-treatment improves the thermal/mechanical integrity of the module. Additionally, this heat-treatment causes radial shrinkage of the end caps. The radial shrinkage of the end caps on the shell creates a compression fit of the cap to the shell and gives added mechanical robustness to the module. Heat-treatment is, preferably, for a period of time sufficient for the module's ends (i.e., where the end caps are joined to the shell) to come to thermal equilibrium. For example, a six-inch module with an epoxy potting may be adequately heat-treated in about 6 hours at 60°C in a hot air oven (i.e., the vertically oriented module at room temperature is placed in the 60°C oven for about 6 hours).

The potting materials 36, 38, and 48 may be thermosetting materials or thermoplastic materials. Thermosetting materials include, but are not limited to, epoxy and polyurethane. Thermoplastic materials include, but are not limited to, polyolefins and polyurethanes. Epoxies are preferred. The first potting material 36 and second potting material 46 may be the same or different, depending upon the requirements of the contactor. For example, the first potting material may be an epoxy, for strength and chemical inertness, and the second potting material may be a polyurethane, for flexibility in the joint between the unit and the shell.

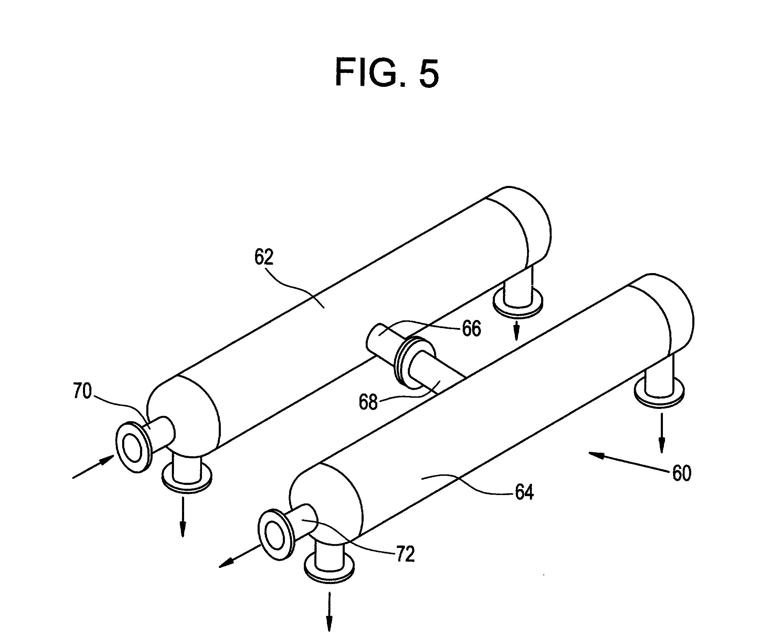

Referring to Figure 5, there is shown a system 60 for degassing a liquid. System 60 comprises two contactors 62 and 64. Contactors 62 and 64 are coupled in series via center ports 66, 68. Port 70 is an inlet and port 72 is an outlet. Ports 74 are coupled to a source of vacuum or vacuum/sweep gas. Contactors 62 and 64 are preferably the contactors described above, e.g., contactor 10. Preferably, these contactors have diameters of 6 inches or greater. The illustrated configuration enables a unique flow pattern. Liquid enters contactor 62 via port 70, flows "inside to out," and exits via port 66. Liquid, then, enters contactor 64 via port 68, flows "outside to in," and exits via port 72.

The present invention may be embodied in other specific forms without departing from the spirit or essential attributes thereof, and, accordingly, reference should be made to the appended claims, rather than to the foregoing specification, as indicating the scope of the invention.

## Claims

1. A method of making a hollow fiber membrane contactor comprising the steps of:
winding a hollow fiber fabric around a center tube,
potting the fabric and the tube together,
forming thereby a unitized structure,
placing the structure into a shell,
potting the structure and the shell together, and
forming thereby a cartridge.

2. The method of claim 1 wherein the first-mentioned potting being bead potting.

3. The method of claim 1 wherein the second-mentioned potting being mold potting.

4. The method of claim 1 further comprising the step of heat-treating the cartridge.

5. The method of claim 4 wherein the heat-treating further comprises a first heat-treating and a second heat-treating.

6. A hollow fiber membrane contactor comprising:
a unitized structure comprising
a center tube,
a hollow fiber fabric wound around said tube, and
a first potting material joining together said fabric and said tube;
a shell; and
a second potting material joining together said structure and said shell.

7. The contactor of claim 6 wherein said structure having a diameter of six (6) inches or more.

8. The contactor of claim 6 further comprising end caps located at end portions of said shell.

9. The contactor of claim 6 wherein the first potting material and the second potting material are the same.

10. The contactor of claim 6 wherein the potting material is selected from the group consisting of thermosetting materials and thermoplastic materials.

11. The contactor of claim 10 wherein the thermosetting materials are selected from the group consisting of epoxy and polyurethane.

12. The contactor of claim 10 wherein the thermoplastic materials are selected from the group consisting of polyolefins and polyurethanes.

13. The contactor of claim 5 further comprising a fabric spacer, said spacer adapted for maintaining said fiber of said fabric in a uniform and spaced apart fashion.

14. A system of contactors for degassing a liquid comprising at least two contactors coupled together, one said contactor being the contactor of claim 6.

15. The system of claim 14 wherein said structure having a diameter of 6 inches or greater.
